# EUROPEAN PATENT SPECIFICATION

(11) **EP 0 639 600 B1**
(45) Date of publication and mention of the grant of the patent: **28.04.1999**
(21) Application number: 94112978.5
(22) Date of filing: 19.08.1994
(51) Int. Cl.: C08G 63/00, C09D 5/14

(54) **Biodegradable resin composition and antifouling paint composition**
Biodegradierbare Harzzusammensetzung und fäulnisverhindernde Lackzusammensetzung
Composition de résine biodégradable et peinture antisalisure

(30) Priority: 20.08.1993 JP 206033/93
(43) Date of publication of application: 22.02.1995
(73) Proprietor: Nippon Paint Co., Ltd., Kita-ku, Osaka-shi, Osaka 531 (JP)
(72) Inventor: Fukuda, Koichi, Osaka-city, Osaka (JP); Yokoi, Junji, Ikoma-city, Nara (JP)
(74) Representative: TER MEER STEINMEISTER & PARTNER GbR

(56) References cited:
- EP-A- 0 117 538
- EP-A- 0 260 799
- GB-A- 2 158 081
- EUROPEAN POLYMER JOURNAL, vol.29, no.2/3, February 1993, OXFORD GB pages 205 - 210, XP335188 S. RIMMER AND M. H. GEORGE 'Synthesis of graft copolymers of poly(caprolactone) and poly(methyl methacrylate) and the use of these materials to synthesize soft-segment grafted polyurethanes.'
- JP-A-4120183 (Derwent abstract), JP-A-4230201 (Derwent abstract)

## Description

### BACKGROUND OF THE INVENTION

### Field of the Invention

The present invention relates to a biodegradable resin composition, and an antifouling paint composition which is employed for preventing a marine structure or the like from damage caused by fouling aquatic organisms.

### Description of the Background Art

A marine structure such as ship's bottoms, port installations, buoys, pipelines, bridges, submarine bases, aquaculture nets, fixed shore nets, installations related to submarine oil fields, conducting tubes or intake works of power stations, breakwaters or ship anchors are fouled by fouling aquatic organisms such as barna-cles, shellfish, bryozoan, algae and the like, leading to significant economic loss.

In order to prevent settlement of such fouling aquatic organisms, the marine structure is generally coated with an antifouling paint, which is mainly prepared from an antifoulant of an inorganic copper compound, an organic tin compound or the like. An antifouling paint contains rosin as a part of its paint binder, and the antifoulant is blended with the same, in order to prevent settlement of fouling aquatic organisms.

On the other hand, known is a hydrolytic antifouling paint which contains an antifouling component of a trialkyl tin polymer. This paint is so prepared that the trialkyl tin polymer is hydrolyzed in an underwater alkalescent atmosphere to elute an organic tin compound, while the paint binder is dissolved in water to elute the antifoulant as blended (refer to GB2084167, for example).

The antifoulant components eluted in such a manner have high toxicity and exhibit antifouling performance by killing or damaging the fouling aquatic organisms to be kept from settlement. Every one of the conventional antifouling paints contains a compound which is toxic for organisms including humans as hereinabove described, and hence the same is problematic in safety for operators. This is a serious problem in consideration of marine pollution, which has recently come into the spotlight.

In recent years, there have been proposed a number of silicone antifouling paints (refer to Japanese Patent Publication No. 63-2995 (1988), for example). Such a silicone antifouling paint utilizes water repellency and low surface free energy of a painted surface. However, the silicone antifouling paint has problems of imperfect adhesion to a coating substrate, insufficient strength of a paint film and difficulty in recoating and repair coating, although the same has low toxicity to the human body and a small degree of environmental pollution. Thus, the silicone antifouling paint is employed merely in a specific region of a nuclear power station, for example.

Under the present circumstances, it is extremely difficult to attain an antifouling function without employment of antifoulant. It is conceivably preferable to employ a hydrolytic binder, which can substantially reduce the amount of the antifoulant. In Japanese Patent Laying-Open Nos. 3-35065 (1991) and 62-13471 (1987), however, it is difficult to control hydrolyzability due to employment of an extremely hydrolyzable organosilyl group for serving as a hydrolytic group. In U.S. Patent Nos. 5080892 and 4918147, the color tone is remarkably restricted since a binder itself contains a heavy metal while the same is a colored binder derived from metal ions.

On the other hand, biodegradable resin is recently watched with interest and various products employing the same have been proposed (refer to WO/92/21708, Japanese Patent Laying-Open No. 3-157450 (1991) and U.S. Patent No. 5191037, for example). Biodegradation is conceivably caused by hydrolysis resulting from the function of external enzyme secreted by microorganisms.

An antifouling paint composition disclosed in Japanese Patent Laying-Open No. 4-120163 (1992) is known as a paint composition employing such a biodegradable resin binder. However, the biodegradable binder proposed in this gazette is not stably dissolved in a general purpose organic solvent for a paint such as xylene or toluene for a long time, and hence problematic in practical application. Further, the binder requires a specific synthesizing installation due to requirement for polycondensation reaction under decompressed and high-temperature conditions, as well as long-time reaction, leading to an economic problem to be solved.

### SUMMARY OF THE INVENTION

An object of the present invention is to provide a biodegradable resin composition having excellent biodegradability with solubility in a general purpose organic solvent, and an antifouling paint employing this biodegradable resin composition.

The present invention is directed to a biodegradable resin composition, which is obtained by graft-polymerizing a compound containing at least two active hydrogen groups in one molecule with a cyclic lactone compound as defined in the claims.

The compound employed in the present invention contains at least two active hydrogen groups in one molecule. These active hydrogen groups serve as reaction sites to start ring-opening polymerization with addition of the cyclic lactone compound so that a comb-type graft polymer is obtained by grafting caused by ring-opening polymerization of the cyclic lactone compound with the compound containing active hydrogen groups.

### <Compounds Containing Active Hydrogen Groups>

The compounds containing active hydrogen groups can be prepared from, polyamino acids, glycerine or its derivatives, polymers of ethylenic unsaturated monomers, or polyvinyl alcohols, for example.

### [Polyamino Acids]

Examples of the polyamino acids are copolyamino acids consisting of amino acid monomers expressed in a general formula H₂N-CHR-COOH, where R represents aminoalkyl groups, guanidinealkyl groups, imidazolealkyl groups, mercaptoalkyl groups, carboxylalkyl groups, hydroxybenzil groups, indolalkyl groups, hydroxyalkyl groups, benzil groups or alkyl groups, specifically, α-amino acids such as lysine, glutamic acid, arginine, serine, tyrosine, cysteine, hydroxyphenylalanine and the like; homopolyamino acids such as ε-polylysine, γ-polylysine and γ-polyglutamic acid; and proteins such as gelatin.

### [Glycerine and Glycerine Derivatives]

Examples of the glycerine and its derivatives are monoglycerides and diglycerides of glycerine and natural fatty acids having carbon numbers of 12 to 24 such as saturated fatty acids such as lauric acid, myristic acid, palmitic acid, stearic acid, arachidic acid, behenic acid and lignoceric acid, and unsaturated fatty acid ssuch as palmitoleic acid, oleic acid, linolic acid, linolenic acid, and arachidonic acid.

### [Polyvinyl Alcohols]

The polyvinyl alcohols are preferably prepared from those having a small degree of polymerization and a high degree of saponification, in consideration of biodegradability. Exemplary polyvinyl alcohols are not more than 1000 in degree of polymerization and at least 50 in degree of saponification. Further, the polyvinyl alcohols whose adjacent hydroxy groups are partially etherelized by dehydration condensation may be employed.

### [Polymers of Ethylenic Unsaturated Monomers]

The polymers of ethylenic unsaturated monomers can be prepared from acrylic resin, for example.

The acrylic resin is obtained by radical-polymerizing acrylic monomer with another copolymerizable monomer in an organic solvent by a well-known technique. The acrylic monomer can be prepared from methyl (meth)acrylate, ethyl (meth)acrylate, n-butyl (meth)acrylate, i-butyl (meth)acrylate, t-butyl (meth)acrylate, 2-ethylhexyl (meth)acrylate, lauryl (meth)acrylate, phenyl (meth)acrylate, benzil (meth)acrylate, 2-hydroxyethyl (meth)acrylate, 2-hydroxypropyl (meth)acrylate, 4-hydroxypropyl (meth)acrylate, an adduct of 2-hydroxyethyl (meth)acrylate and ε-caprolactone such as PLACCEL FM1 by Daicel Chemical Industries, Ltd., for example, (meth)acrylic acid, sulfonate 2-(meth)acrylamide-2-methylpropane, (meth)acrylonitrile, (meth)acrolein, N,N-dimethyl(meth)acrylamide, N,N-dimethylaminoethyl (meth)acrylate, diethylaminoethyl (meth)acrylate, N-t-butylaminoethyl (meth)acrylate, acid phosphoxypropyl (meth)acrylate, glycidyl (meth)acrylate, 3-trimethoxysilylpropyl (meth)acrylate, 3-triethoxysilylpropyl (meth)acrylate, dimethoxymethylsilylpropyl (meth)acrylate, and (meth)acrylamide. The copolymerizable monomer is prepared from α, β unsaturated vinyl monomers other than acrylic monomers, such as styrene, α-methylstyrene, vinyl toluene, allyl glycidyl ether, itaconic acid, anhydrous itaconic acid, maleic acid, anhydrous maleic acid, vinyl acetate, allyl acetate, allylamine, 1-vinyl-pyrolidone, vinyl trimethoxysilane or vinyl triethoxysilane. The content of such a copolymer component is preferably not more than 50 percent by weight of the overall monomer including the acrylic monomer.

The organic solvent employable in polymerization of the acrylic monomer is prepared from ester solvent of ethyl acetate, butyl acetate or isobutyl acetate, aromatic hydrocarbon solvent of xylene or toluene, ketone solvent of methyl isobutyl ketone or methyl ethyl ketone, alcohol solvent of isopropyl alcohol or n-butanol, polar solvent containing no active hydrogen groups in its molecules such as tetrahydrofuran, N,N-dimethylformamide, dimethylsulfoxide or N-methylpyrrolidone, or a mixture of two or more such solvents.

A radical polymerization initiator is prepared from that employed in ordinary radical polymerization such as azo polymerization initiator such as azobisisobutyronitrile, 2,2'-azobis(2,4-dimethylvaleronitrile), 2,2'-azobis(2-amidinopropane) hydrodichloride, 4,4'-azobis(4-cyanovaleric acid), 2,2'-azobis[2-(5-methyl-2-imidazoline-2-yl)propane] hydrodichloride, 2,2'-azobis{2-methyl-N-[1,1-bis(hydroxymethyl)-2-hydroxyethyl] propionamide} or 2,2'-azobisisobutylamide dihydrate or peroxide polymerization initiator such as benzoyl peroxide, lauroyl peroxide, t-butyl peroxy-2-ethyl hexanoate or cumene hydroperoxide, for example.

The aforementioned polymerization reaction can be generally made under a temperature of about 60 to 180°C, preferably 90 to 120°C, to be completed in 2 to 10 hours, generally in about 3 to 6 hours, under such a condition.

The average molecular weight of the ethylenic unsaturated polymer as obtained is preferably within the range of 800 to 1,000,000. In order to attain the molecular weight of this range, the amount of the radical polymerization initiator may be adjusted, mercapto compound chain transfer agents such as t-dodecanethiol, 2-ethylhexyl thioglycolate, thiobenzoic acid or thioethanol may be employed, allyl compounds such as allyl alcohol may be employed, or aromatic chain transfer agents such as 2,4-diphenyl-4-methyl-1-pentene (α-methylstyrene dimer) may be employed, for example. Such acrylic polymer has one or at least two carboxyl, hydroxyl and/or amino groups, as active hydrogen groups having graft polymerization reactivity with the cyclic lactone compound.

The average molecular weight of the acrylic resin employed in the present invention is preferably 800 to 1,000,000, more preferably 1,000 to 500,000. If the average molecular weight is too low, the acrylic resin may contain no active hydrogen groups in its molecules. If the average molecular weight is too high, on the other hand, paint workability is extremely reduced. The term "average molecular weight" employed in this specification indicates a value which is obtained by GPC (gel permeation chromatography) in terms of polystyrene.

### [Other Compounds Containing Active Hydrogen Groups]

### <Cyclic Lactone Compounds>

The cyclic lactone compound employed in the present invention can be prepared from that expressed in the following general formula (I) or (II): 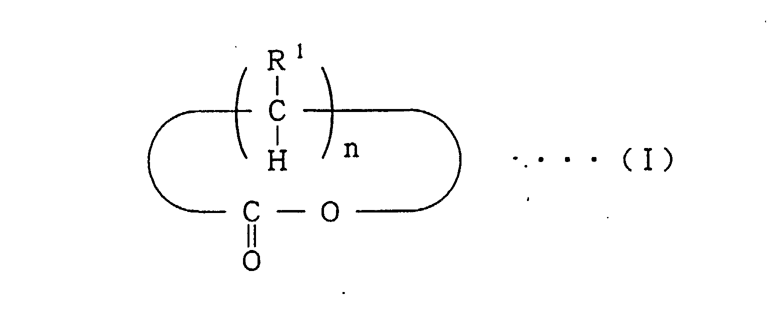 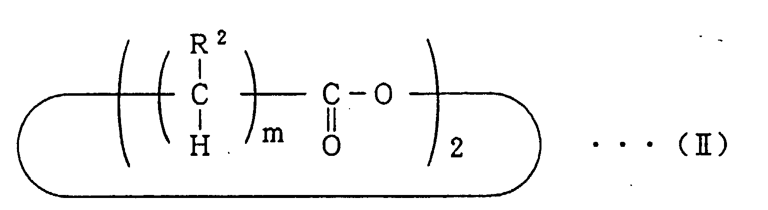 where n represents an integer of 2 to 12, m represents 1 or 2, and R¹ and R² represent hydrogen atoms, methyl groups or ethyl groups.

Examples of the cyclic lactone compounds are β-propiolactone, γ-butyrolactone, δ-valerolactone, ε-caprolactone, ω-caprynolactone, ω-caprynolactone, ω-laurolactone, glycolides which are cyclic dimers of glycolic acid, and lactides which are cyclic dimers of lactic acid. Further, cyclic lactone compounds having alkyl side chains of methyl groups and ethyl groups such as β-butyrolactone, γ-valerolactone, γ-caprolactone, or δ-caprolactone are also employable.

### 〈Graft Polymerization>

The biodegradable resin composition according to the present invention, which is a composition obtained by polymerizing the aforementioned compound containing active hydrogen groups by the cyclic lactone compound in a ring-opening manner, may contain unreacted compound containing active hydrogen groups or unreacted cyclic lactone compound, for example. After completion of the polymerization reaction, therefore, the inventive biodegradable resin composition can be brought into a form which is responsive to the object of employment as such or through addition or removal of solvent.

The polymerization is made by a well-known technique. For example, a mixture of compound containing active hydrogen groups selected from the group consisting of, polyamino acids, glycerine and its derivatives, polymers of ethylenic unsaturated monomers, and polyvinyl alcohols, cyclic lactone compounds and polymerization catalyst with inactive solvent being added at need is heated and stirred with supply of nitrogen gas and subjected to graft polymerization reaction for a prescribed period, to obtain a biodegradable resin composition.

### [Graft Polymerization Ratio]

In synthesis of the biodegradable resin composition, the weight compounding ratio of the compound containing active hydrogen groups to the cyclic lactone compound is preferably within the range of 0.01/100 to 200/100, more preferably in the range of 0.1/100 to 100/100, in particular. If the weight ratio of the compound containing active hydrogen groups to the cyclic lactone compound is out of the range of 0.01/100 to 200/100, neither mechanical strength for serving as resin nor solubility in organic solvent is obtained, while biodegradability for serving as a biodegradable composition is extremely reduced in addition if the ratio exceeds 200/100.

### [Graft Polymerization Catalysts]

The polymerization catalyst can be prepared from a known compound such as organic tin compounds such as dibutyl tin dilaurate, dilauryl tin oxide, butyl tin tri-2-ethyl hexanoate and dibutyl tin methoxide, organic titanium compounds such as tetraisopropyl titanate, tetrabutyl titanate and tetrakis(2-ethylhexyl) titanate, Lewis acid compounds such as antimony compounds such as antimony trifluoride, antimony trichloride or antimony trisulfide or molybdenum compounds, alkyl metals such as lithium hydroxide and butylated lithium, and rare earth metal complex compounds, but is not restricted to these.

### <Crosslinking Agents>

It is preferable to crosslink the interior of the paint film by polyisocyanate compounds such as hexamethylene diisocyanate and toluene diisocyanate; dibasic acid anhydrides and resins containing dibasic acid anhydrides such as anhydrous polymaleic acid, styrene/anhydrous maleic acid copolymer and anhydrous pyromellitic acid; melamine formaldehyde resin; or polyepoxy compounds, in order to improve strength of the paint film and to control the biodegradation speed. The crosslinking agent is preferably added in an amount not extremely damaging biodegradability of the biodegradable resin composition, preferably in the range of 0 to 50 mole percent, more preferably 0 to 30 mole percent, with respect to the active hydrogen groups contained in the biodegradable resin.

### Antifouling Paint Composition

It is possible to prepare the inventive antifouling paint composition by employing the aforementioned inventive biodegradable resin composition as a main binder.

Further, it is possible to also employ resins other than the above such as acrylic resins, polyester resins, polyamide resins, silicone resins, polyether resins and polyvinyl resins in the degree not damaging antifouling performance of the antifouling paint composition, in order to improve physical properties of the paint film etc.

### [Antifouling Additive]

While an antifouling effect may be provided by a system consisting of only the biodegradable resin composition serving as main binder and solvent, or consisting of only main binder, subbinder and crosslinking agent as the case may be, it is generally preferable to employ antifouling additive in the range not damaging biodegradability of the binder, in order to attain high antifouling performance. The antifouling additive employed in the present invention can be arbitrarily prepared so far as the same will not extremely interfere with hydrolysis of the main binder by microorganisms.

The antifouling additive can be prepared from chemicals which are generally employed for antifouling paints, such as zinc dimethyldithiocarbamate, 2-methylthio-4-t-butylamino-6-cyclopropylamino-s-triazine, 2,4,5,6-tetrachloroisophthalonitrile, N,N-dimethyl dichlorophenylurea, copper rhodanide, copper suboxides, 4,5-dichloro-2-n-octyl-3(2H)isothiazoline, N-(fluorodichloromethylthio)phthalimide, N,N'-dimethyl-N'-phenyl-(N-fluorodichloromethylthio)sulfamide, 2-pyridinethiol-1-oxide zinc salt (zinc pyrithione), 2,4,5,6-tetrachloro-4-(methylsulfonyl)pyridine, 3-iodo-2-propynylbutylcarbamate, and diiodomethylparathorylsulfone or the like. The additive can also be prepared from surface active agent (combination of one or at least two elements selected from anion, cation and nonion systems), algicides, pesticides, antibiotics, enzyme activity inhibitors such as alkylphenol or alkylresorcinol, or compounds other than the above having relatively mild toxicity. The additive can be introduced in an arbitrary amount but its content is preferably about 50 percent by weight at the the maximum so that strength of the paint film is not reduced and biodegradability is not inhibited unless the additive is introduced in a safe antifouling amount, while the lower limit of the amount is preferably minimized in consideration of environmental pollution.

### [Other Additives]

The inventive antifouling paint composition can be further properly blended with plasticizer, rheology modifier such as antisagging agent or thickening agent, color pigment such as titanium oxide, red oxide or organic dye, chemicals allowed by Japanese Food Sanitation Law such as preservatives, fungicides, antioxidants, bactericides or aromatics, for example, ultraviolet absorbants, extender pigments such as clay, alumina, silica and talc, and surface modifier such as paraffin and silicone oil.

### [Content of Biodegradable Resin]

The inventive antifouling paint composition contains 10 to 95 percent by weight, preferably 30 to 70 percent by weight in particular, of the aforementioned biodegradable resin composition as vehicle component. If the amount of the biodegradable resin composition is too small, the composition cannot serve as paint binder or has only a short antifouling period. If the amount of the biodegradable resin composition is too large, on the other hand, it is impossible to prepare antifouling paint composition which is practically employable for a long time.

### [Coating Means and Coated Substance]

A method of forming a paint film by the inventive antifouling paint composition is not particularly restricted but a method similar to that for a conventional antifouling paint is employable. For example, it is possible to directly apply the inventive antifouling paint composition to the surface of a base material such as marine structures such as ship's bottoms, port installations, buoys, pipelines, bridges, submarine bases, aquaculture nets, fixed shore nets, installations related to submarine oil fields, conducting tubes or intake works of power stations, breakwaters or ship anchors, for example, or to apply the same to the surface of a base material provided with a coated film which is formed by combining and applying a primer such as wash primer or zinc epoxy primer, primer such as oil rust inhibitors or chlorinated rubber or epoxy primer and an intermediate or finish coat of long oil phthalate resin, chlorinated rubber or epoxy, or by successively applying primer, intermediate coat and finish coat, by brush painting, spray painting, roller painting, electrostatic painting or dipping. The amount of application can be in the range of 5 to 500 µm, preferably 10 to 300 µm, as a thickness after drying, in general. The paint film can be dried under a room temperature condition, while the same can also be dried under a heated condition or a temperature below the room temperature, as the case may be.

The biodegradable resin composition according to the present invention is obtained by graft-polymerizing the compound containing active hydrogen groups with the cyclic lactone compound. Therefore, a polymer chain portion formed by ring-opening polymerization of the cyclic lactone compound can be readily microbiochemically and chemically hydrolyzed. Thus, the inventive biodegradable resin composition has excellent degradability in the applied environment.

Further, the inventive biodegradable resin composition is soluble in a general-purpose organic solvent such as toluene, xylene, butyl acetate, methyl isobutyl ketone or n-butyl alcohol.

The inventive antifouling paint composition employs the aforementioned inventive biodegradable resin composition as binder. Thus, the paint composition is soluble in generalpurpose organic solvent such as toluene, xylene, butyl acetate, methyl isobutyl ketone or n-butyl alcohol, and is gradually decomposed from the surface of the paint film as formed by biodegradation, hydrolytic reaction etc. and consumed while releasing the antifouling additive etc. Thus, it is possible to prevent a submerged object such as ship's bottoms from fouling of aquatic organisms or the like, by applying the inventive antifouling paint composition thereto.

The foregoing and other objects, features, aspects and advantages of the present invention will become more apparent from the following detailed description of the present invention.

### DESCRIPTION OF THE PREFERRED EMBODIMENTS

Examples of the present invention are now described. Throughout the specification, parts and percent are those by weight, unless otherwise stated. The present invention is not restricted to the following Examples.

### [Preparation of Biodegradable Resin Composition]

### Preparation Example 1

195 parts of ε-caprolactone, 5 parts of glycerine, and 0.16 parts of an organic tin compound (FASCAT 4102 (trade name) by M & T Chemicals Inc.) for serving as a catalyst were introduced into a separable flask of 500 ml in volume comprising a stirrer and a nitrogen jet feeder, and brought into reaction at 180°C with continuation of of stirring and nitrogen gas feeding, until disappearance of IR spectral absorption derived from ε-caprolactone. The mixture was stood to cool after completion of the reaction, and collected with further addition of 200 parts of toluene. The toluene solution as collected contained 50.5,percent of non-volatile matter, which was measured in a high vacuum oven at 120°C for 3 hours under a pressure of not more than I mmHg. The average molecular weight in terms of polystyrene, which was measured by gel permeation chromatography (hereinafter simply referred to as GPC), was about 9000.

Table 1 also shows results of Preparation Example 1.

**Table 1**

| Preparation Example | ε-Caprolactone | Compound Containing Active Hydrogen | Non-Volatile Matter | GPC Average Molecular Weight |
|---|---|---|---|---|
| 1 | 195 parts | 5 parts of Glycerine | 50.5 % | about 9,000 |

### Preparation Examples 2 to 6

Polymerization reaction was made similarly to Preparation Example 1 except that compounding ratios were as shown in Table 2 and amounts of toluene added after completion of the reaction were changed to 150 parts, to obtain biodegradable resin compositions.

In each of Preparation Examples 5 and 6, 0.12 parts of tetrabutyl titanate was employed as a catalyst, in place of FASCAT 4102. Referring to Table 2, Poval 403 (trade name by Kuraray Co., Ltd.) is polyvinyl alcohol of 300 in degree of polymerization and 90 in degree of saponification, and Poval 203 (trade name by Kuraray Co., Ltd.) is polyvinyl alcohol of 300 in degree of polymerization and 80 in degree of saponification.

**Table 2**

| Preparation Example | ε-Caprolactone | Compound containing Active Hydrogen | Non-volatile Matter | GPC Aberage Molecular weight |
|---|---|---|---|---|
| 2 | 142.5 parts | 7.5 parts of Glycerine | 49.9 % | about 9,000 |
| 3 | 148.1 parts | 1.88 parts of Glycerine | 50.3 % | about 150,000 |
| 4 | 149.1 parts | 0.94 parts of ε-Polylysine | 49.5 % | about 270,000 |
| 5 | 142.5 parts | 15 parts of Poval 403 | 49.7 % | about 210,000 |
| 6 | 142.5 parts | 15 parts of Poval 203 | 49.5 % | about 230,000 |

### Preparation Example 7

200 parts of xylene was introduced into a separable flask of 500 ml in volume comprising a stirrer and a nitrogen gas feeder, and heated to a temperature of 120°C with continuation of stirring and nitrogen feeding. A mixture of 20 parts of N,N-dimethyl methacrylamide, 30 parts of hydroxyethyl methacrylate, 114 parts of ethyl acrylate, 30 parts of methyl methacrylate, 6 parts of 2-ethylhexyl thioglycolate and 5 parts of azobisisobutyronitrile (AIBN), which was introduced into a dropping funnel, was dropped into the separable flask over 2 hours, and reaction was continued further for 3 hours, to obtain an acrylic resin solution. The xylene solution as collected contained 49.3 percent of non-volatile matter, which was measured in a high vacuum oven at 120°C for 3 hours under a pressure of not more than 1 mmHg. The average molecular weight in terms of polystyrene, which was measured by GPC, was about 13,000.

50 parts of the acrylic resin solution obtained in the aforementioned manner, 175 parts ε-caprolactone, and 0.08 parts of dibutyl tin diacetate for serving as a catalyst were introduced into a separable flask of 500 ml in volume comprising a stirrer and a nitrogen gas feeder, and brought into reaction at a temperature of 180°C with continuation of stirring and nitrogen gas feeding until disappearance of IR spectral absorption derived from ε-caprolactone. After completion of the reaction, the mixture was stood to cool, and collected with further addition of 195 parts of toluene. The toluene solution as collected contained 50.3 percent of non-volatile matter, which was measured in a high vacuum oven at 120°C for 3 hours under a pressure of not more than 1 mmHg. The average molecular weight in terms of polystyrene, which was measured by GPC, was about 170,000.

### <Evaluation of Biodegradability>

The biodegradable resin compositions obtained in Preparation Examples 1 to 7 were employed to prepare cast films on fluorine plates in compounding ratios shown in Table 3, and the films were dried under room temperature conditions for about 1 week, to obtain resin bodies. These resin bodies were dipped in a general service sink for six months, and subjected to a biodegradability test. Table 3 shows the results.

Referring to Table 3, "Coronate HX" indicates polyisocyanate as a crosslinking agent (non-volatile matter: 75 %, by Nippon Polyurethane Industry Co., Ltd.). Referring to Table 3, the term "substantially disintegrated" indicates that each sample was readily disintegrated when tensile stress was applied thereto by a fingertip.

**Table 3**

| Blending | | | State of Resin | |
|---|---|---|---|---|
| Biodegradable Resin Composition | | Coronate HX | Before Test | After Test |
| Preparation Example | | | | |
| 1 | 100 parts | 5 parts | Semi transparent Rubber | Substantialy Disintegrated |
| 2 | 100 parts | 5 parts | Opaque Elastic Body | Substantialy Disintegrated |
| 3 | 100 parts | 0 parts | Opaque Elastic Body | Substantialy Disintegrated |
| 4 | 100 parts | 0 parts | Opaque Elastic Body | Substantialy Disintegrated |
| 5 | 100 parts | 0 parts | Opaque Elastic Body | Substantialy Disintegrated |
| 6 | 100 parts | 0 parts | Opaque Elastic Body | Substantialy Disintegrated |
| 7 | 100 parts | 0 parts | Opaque Elastic Body | Extremely Deteriorated |
| *High Density Polyethylene | | --- | Opaque Resin Body | Merely Slightly Colored |

| | | | | |
|---|---|---|---|---|
| * High Density Polythylene : Trade Name Shoulex [HF-21S] (by Showa Denko, K.K.) | | | | |

### <Evaluation of Antifouling Paint>

### Example 1

80 parts of the resin composition obtained in Preparation Example 1, 10 parts of p-nonylphenol, 10 parts of cetylpyridine chloride, 1 part of Coronate HX, 35 parts of xylene, and 15 parts of titanium oxide were sufficiently mixed with each other by a homogenizer, to prepare an antifouling paint composition. This composition was applied onto a steel plate coated with a commercially available vinyl tar anticorrosive paint so that its thickness was 100 to 150 µm in average after drying, and dried for 3 days under room temperature conditions, thereby forming a paint film.

### Examples

Antifouling paint compositions and paint films were formed similarly to Example 1, except that the resin composition obtained in Preparation Example 1, which was employed in Example 1, was replaced by those obtained in Preparation Examples 2 to 7.

### Comparative Example 1

An antifouling paint composition consisting of 30 parts of copper suboxide, 25 parts of Laroflex MP-45 (vinyl chloride/vinyl isopropylether copolymer by BASF German, Ltd.), 25 parts of WW rosin, 1 part of dioctyl phthalate, 1 part of colloidal silica, 15 parts of xylene, and 3 parts of methyl isobutyl ketone was prepared as that containing copper suboxide. The paint composition as obtained was applied onto a steel plate coated with a commercially available vinyl tar anticorrosive paint so that its thickness was 100 to 150 µm after drying, and dried for 3 days under room temperature conditions, thereby forming a paint film.

### Comparative Example 2

An antifouling paint composition consisting 50 parts of acrylic resin varnish (a copolymer of 50 parts of methyl methacrylate and 50 parts of n-butyl methacrylate having a weight average molecular weight of 46,000, a number average molecular weight of 18,000 and non-volatile matter concentration of 52.1 %), 10 parts of N,N-dimethyldichlorophenylurea, 2,4,5,6-tetrachloroisophthalonitrile, 1 part of dioctyl phthalate, 1 part of colloidal silica, 10 parts of red oxide and 18 parts of xylene was employed to prepare an evaluation test plate similarly to comparative example 1.

The paint films obtained in Examples 1 to 14 and comparative examples 1 and 2 were submerged in sea water of 1 m in depth continuously for two years, and subjected to evaluation of antifouling performance. The evaluation was made in the following five stages:
○: having no adhesion of organisms other than small amounts of slimy organisms
○ - Δ: having areas of less than 5 percent with adhesion of large animals/plants other than slimy organisms
Δ: having areas of 5 to 20 percent with adhesion of large animals/plants other than slimy organisms
Δ - ×: having areas of 20 to 50 percent with adhesion of large animals/plants other than slimy organisms
×: having areas of at least 50 percent with adhesion of large animals/plants other than slimy organisms

Table 4 shows the results.

**Table 4**

| | Antifouling Performance | | | | |
|---|---|---|---|---|---|
| | 1 Month | 3 Months | 6 Months | 1 Year | 2 Years |
| Example 1 | ○ | ○ | ○ | ○ | ○-Δ |
| Example 2 | ○ | ○ | ○ | ○ | ○ |
| Example 3 | ○ | ○ | ○ | ○ | ○ |
| Example 4 | ○ | ○ | ○ | ○ | ○ |
| Example 5 | ○ | ○ | ○ | ○ | ○-Δ |
| Example 6 | ○ | ○ | ○ | ○ | ○-Δ |
| Example 7 | ○ | ○ | ○ | ○ | ○ |
| Comparative Example 1 | ○ | ○ | ○ | ○ | Δ |
| Comparative Example 1 | ○ | Δ | × | × | × |

As clearly understood from Table 4, the paint film employing the resin composition according to each of Examples according to the present invention has antifouling performance which is substantially similar to that of a ship bottom antifouling paint containing copper suboxide. Thus, the antifouling paint composition employing the inventive biodegradable resin composition exhibits excellent antifouling effect for a long-term.

## Claims

1. An antifouling paint composition comprising:
a biodegradable resin having an average molecular weight of about 9000 or more and being obtained by polymerizing a cyclic lactone compound with at least one compound containing at least two active hydrogen groups in one molecule selected from the group consisting of polyamino acids, glycerine, monoglycerides and diglycerides of glycerine and natural fatty acids having carbon numbers of 12 to 24, polymers of ethylenic unsaturated monomers having at least two carboxyl, hydroxyl, or amino groups, and polyvinyl alcohols; and
an antifouling additive being mixed with said biodegradable resin when preparing said antifouling paint composition.

2. An antifouling paint composition in accordance with claim 1, wherein said cyclic lactone compound is expressed in the following general formula(s) (I) and/or (II): 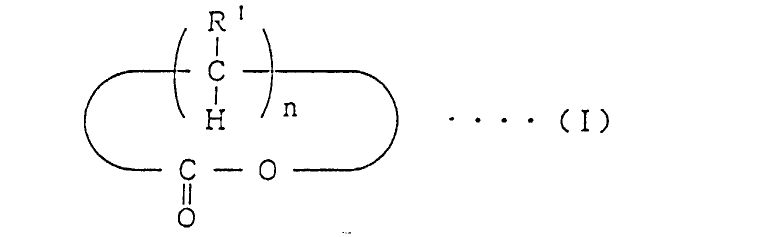 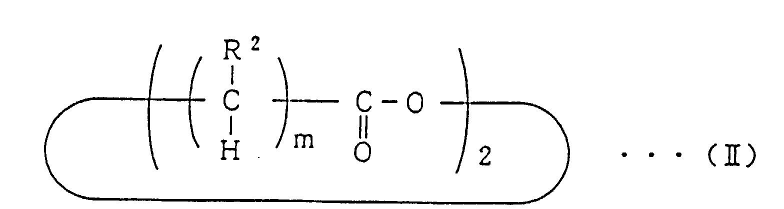 wherein n represents an integer of 2 to 12, m represents 1 or 2, and R¹ and R² represent hydrogen atoms, methyl groups or ethyl groups.

3. An antifouling paint composition in accordance with claim 1, wherein said cyclic lactone compound is ε-caprolactone.

4. An antifouling paint composition in accordance with claim 1, wherein said biodegradable resin is cross-linked by a cross-linking agent in an amount of 50 mole percent or less with respect to the active hydrogen groups in said biodegradable resin.

5. An antifouling paint composition in accordance with claim 1, wherein said polymer of ethylenic unsaturated monomer is acrylic resin having at least two carboxyl, hydroxyl, or amino groups.

6. An antifouling paint composition comprising;
a biodegradable resin having an average molecular weight of about 170,000 or more and being obtained by polymerizing a cyclic lactone compound with at least one compound containing at least two active hydrogen groups in one molecule selected from the group consisting of polyamino acids, polymers of ethylenic unsaturated monomers having at least two carboxyl, hydroxyl, or amino groups, and polyvinyl alcohols; and
an antifouling additive being mixed with said biodegradable resin when preparing said antifouling paint composition.

7. An antifouling paint composition in accordance with claim 6, wherein said cyclic lactone compound is expressed in the following general formula(s) (I) and/or (II): 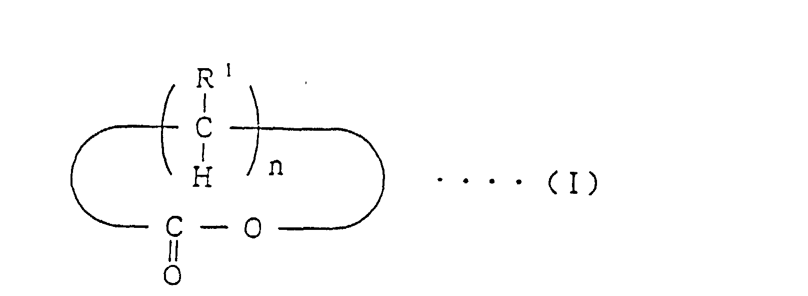 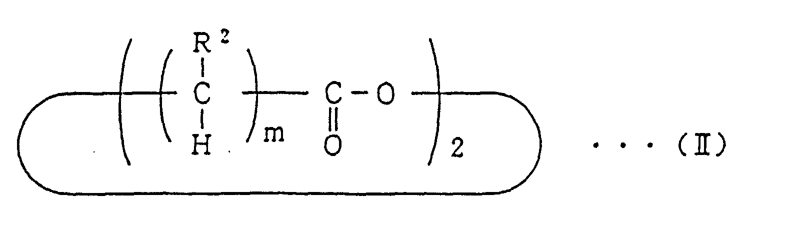 wherein n represents an integer of 2 to 12, m represents 1 or 2, and R¹ and R² represent hydrogen atoms, methyl groups or ethyl groups.

8. An antifouling paint composition in accordance with claim 6, wherein said cyclic lactone compound is ε-caprolactone.

9. An antifouling paint composition in accordance with claim 6, wherein said biodegradable resin is cross-linked by a crosslinking agent in an amount of 50 mole percent or less with respent to the active hydrogen groups in said biodegradable resin.

10. An antifouling paint composition in accordance with claim 6, wherein said polymer of ethylenic unsaturated monomer is acrylic resin having at least two carboxyl, hydroxyl, or amino groups.

## Patentansprüche

1. Antifäulnis-Farbzusammensetzung, umfassend:
ein bioabbaubares Harz mit einem Durchschnittsmolekulargewicht von etwa 9000 oder mehr, erhalten durch Polymerisieren einer cyclischen Lactonverbindung mit mindestens einer Verbindung, welche mindestens zwei aktive Wasserstoffgruppen in einem Molekül enthält, gewählt aus der Gruppe, bestehend aus Polyaminosäuren, Glycerin, Monoglyceriden und Diglyceriden aus Glycerin und natürlichen Fettsäuren mit Kohlenstoffanzahlen von 12 bis 24, Polymeren von ethylenisch ungesättigten Monomeren mit mindestens zwei Carboxyl-, Hydroxyl- oder Aminogruppen, und Polyvinylalkoholen; und
ein Antifäulnisadditiv, welches mit dem bioabbaubaren Harz bei der Herstellung der Antifäulnis -Farbzusammensetzung vermischt wird.

2. Antifäulnis-Farbzusammensetzung nach Anspruch 1, wobei die cyclische Lactonverbindung der folgenden allgemeinen Formel (I) und/oder (II) entspricht: 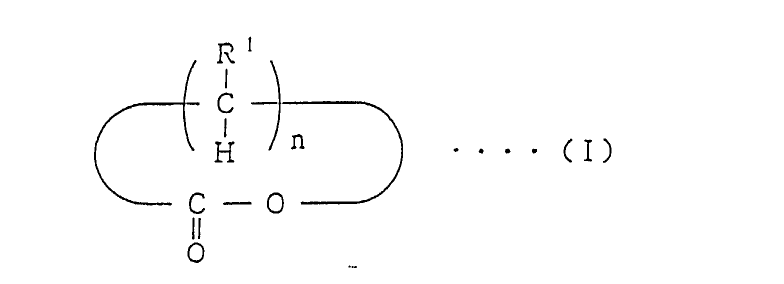 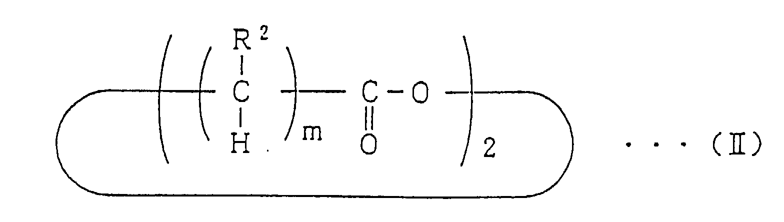 worin n eine ganze Zahl von 2 bis 12 bedeutet, m 1 oder 2 bedeutet, und R¹ und R² Wasserstoffatome, Methylgruppen oder Ethylgruppen bedeuten.

3. Antifäulnis-Farbzusammensetzung nach Anspruch 1, wobei die cyclische Lactonverbindung ε-Caprolacton ist.

4. Antifäulnis-Farbzusammensetzung nach Anspruch 1, wobei das bioabbaubare Harz durch ein Vernetzungsmittel in einer Menge von 50 Mol-% oder weniger bezüglich der aktiven Wasserstoffgruppen in dem bioabbaubaren Harz vernetzt ist.

5. Antifäulnis-Farbzusammensetzung nach Anspruch 1, wobei das Polymer aus ethylenisch ungesättigtem Monomer Acrylharz mit mindestens zwei Carboxyl-, Hydroxyl- oder Aminogruppen ist.

6. Antifäulnis-Farbzusammensetzung, umfassend:
ein bioabbaubares Harz mit einem Durchschnittsmolekulargewicht von etwa 170.000 oder mehr, erhalten durch Polymerisieren einer cyclischen Lactonverbindung mit mindestens einer Verbindung, welche mindestens zwei aktive Wasserstoffgruppen in einem Molekül enthält, gewählt aus der Gruppe, bestehend aus Polyaminosäuren, Polymeren von ethylenisch ungesättigten Monomeren mit mindestens zwei Carboxyl-, Hydroxyl- oder Aminogruppen, und Polyvinylalkoholen; und
ein Antifäulnisadditiv, welches mit dem bioabbaubaren Harz bei der Herstellung der Antifäulnis-Farbzusammensetzung vermischt wird.

7. Antifäulnis-Farbzusammensetzung nach Anspruch 6, wobei die cyclische Lactonverbindung der folgenden allgemeinen Formel (I) und/oder (II) entspricht: 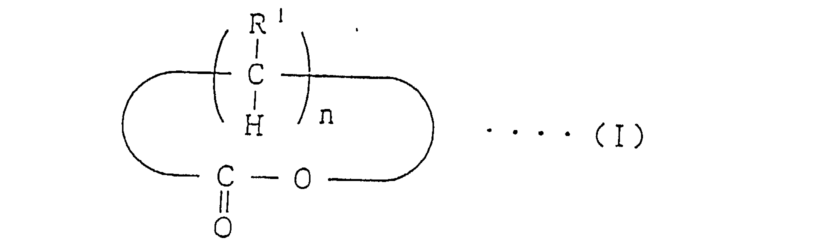 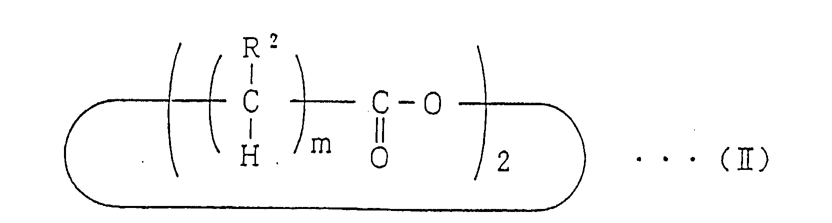 worin n eine ganze Zahl von 2 bis 12 bedeutet, m 1 oder 2 bedeutet, und R¹ und R² Wasserstoffatome, Methylgruppen oder Ethylgruppen bedeuten.

8. Antifäulnis-Farbzusammensetzung nach Anspruch 6, wobei die cyclische Lactonverbindung ε-Caprolacton ist.

9. Antifäulnis -Farbzusammensetzung nach Anspruch 6, wobei das bioabbaubare Harz durch ein Vernetzungsmittel in einer Menge von 50 Mol-% oder weniger bezüglich der aktiven Wasserstoffgruppen in dem bioabbaubaren Harz vernetzt ist.

10. Antifäulnis-Farbzusammensetzung nach Anspruch 6, wobei das Polymer aus ethylenisch ungesättigtem Monomer Acrylharz mit mindestens zwei Carboxyl-, Hydroxyl- oder Aminogruppen ist.

## Revendications

1. Composition de peinture antisalissure comprenant :
une résine biodégradable ayant un poids moléculaire moyen d'environ 9000 ou plus et obtenue en polymérisant une lactone cyclique avec au moins un composé contenant au moins deux groupes à hydrogène actif par molécule choisi dans la classe formée par les polyamino-acides, le glycérol, les monoglycérides et diglycérides du glycérol et d'acides gras naturels ayant 12 à 24 atomes de carbone, les polymères de monomères éthyléniquement insaturés ayant au moins deux groupes carboxyle, hydroxyle ou amino, et les poly(alcool vinylique) ; et
un additif antisalissure qui est mélangé avec ladite résine biodégradable lors de la préparation de ladite composition de peinture antisalissure.

2. Composition de peinture antisalissure selon la revendication 1, dans laquelle ladite lactone cyclique est exprimée par les formules générales (I) et/ou (II) suivantes : 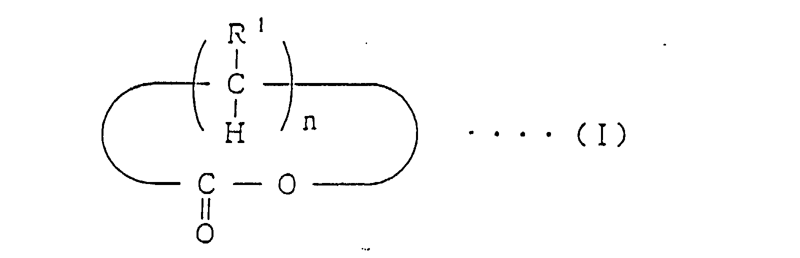 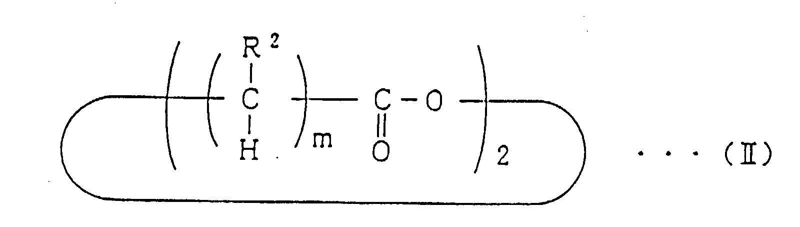 dans lesquelles n représente un nombre entier de 2 à 12, m représente 1 ou 2, et R¹ et R² représentent des atomes d'hydrogène, des groupes méthyle ou des groupes éthyle.

3. Composition de peinture antisalissure selon la revendication 1, dans laquelle ladite lactone cyclique est la ε-caprolactone.

4. Composition de peinture antisalissure selon la revendication 1, dans laquelle ladite résine biodégradable est réticulée par un agent de réticulation en une quantité d'au plus 50 moles pour cent par rapport aux groupes à hydrogène actif contenus dans ladite résine biodégradable.

5. Composition de peinture antisalissure selon la revendication 1, dans laquelle ledit polymère de monomère éthyléniquement insaturé est une résine acrylique ayant au moins deux groupes carboxyle, hydroxyle ou amino.

6. Composition de peinture antisalissure comprenant :
une résine biodégradable ayant un poids moléculaire moyen d'environ 170 000 ou plus et obtenue en polymérisant une lactone cyclique avec au moins un composé contenant au moins deux groupes à hydrogène actif par molécule choisi dans la classe formée par les polyamino-acides, les polymères de monomères éthyléniquement insaturés ayant au moins deux groupes carboxyle, hydroxyle ou amino, et les poly-(alcool vinylique) ; et
un additif antisalissure qui est mélangé avec ladite résine biodégradable lors de la préparation de ladite composition de peinture antisalissure.

7. Composition de peinture antisalissure selon la revendication 6, dans laquelle ladite lactone cyclique est exprimée par les formules générales (I) et/ou (II) suivantes : 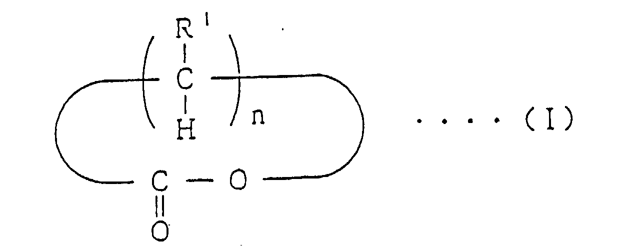 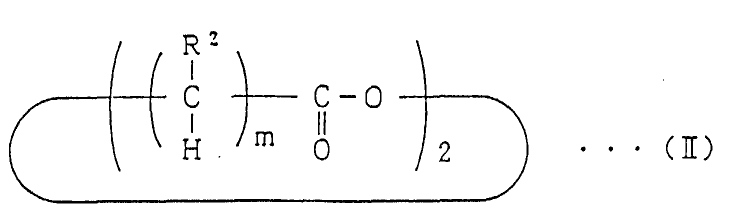 dans lesquelles n représente un nombre entier de 2 à 12, m représente 1 ou 2, et R¹ et R² représentent des atomes d'hydrogène, des groupes méthyle ou des groupes éthyle.

8. Composition de peinture antisalissure selon la revendication 6, dans laquelle ladite lactone cyclique est la ε-caprolactone.

9. Composition de peinture antisalissure selon la revendication 6, dans laquelle ladite résine biodégradable est réticulée par un agent de réticulation en une quantité d'au plus 50 moles pour cent par rapport aux groupes à hydrogène actif contenus dans ladite résine biodégradable.

10. Composition de peinture antisalissure selon la revendication 6, dans laquelle ledit polymère de monomère éthyléniquement insaturé est une résine acrylique ayant au moins deux groupes carboxyle, hydroxyle ou amino.
